(19) **Europäisches Patentamt**
**European Patent Office**
**Office européen des brevets**

(11) **EP 1 382 905 B1**

(12) **EUROPEAN PATENT SPECIFICATION**

(45) Date of publication and mention of the grant of the patent:
**09.05.2007 Bulletin 2007/19**

(51) Int Cl.:
*F23G 5/50* (2006.01)   *F23G 5/46* (2006.01)
*F23N 1/00* (2006.01)   *C04B 7/36* (2006.01)
*F27D 19/00* (2006.01)

(21) Application number: **02405630.1**

(22) Date of filing: **19.07.2002**

(54) **Determining an input material mix for a kiln**

Bestimmung der Zusammenstellung eines Stoffgemisches zur Zufuhr in einen Ofen

Détermination de la composition du mélange alimentant un four

(84) Designated Contracting States:
**AT BE BG CH CY CZ DE DK EE ES FI FR GB GR IE IT LI LU MC NL PT SE SK TR**

(43) Date of publication of application:
**21.01.2004 Bulletin 2004/04**

(73) Proprietor: **ABB RESEARCH LTD.**
**8050 Zürich (CH)**

(72) Inventors:
• **Gallestey Alvarez, Eduardo**
  **5522 Tägerig (CH)**
• **Frei, Christian**
  **5442 Fislisbach (CH)**
• **Brooks, John**
  **Sidcup,**
  **Kent DA14 4LD (GB)**
• **Clark, Douglas**
  **S81 0UW Worksop (GB)**

(74) Representative: **ABB Patent Attorneys**
**c/o ABB Schweiz AG,**
**Intellectual Property (CH-LC/IP),**
**Brown Boveri Strasse 6**
**5400 Baden (CH)**

(56) References cited:
EP-A- 0 183 990          EP-A- 0 974 561
WO-A-02/22246            US-A- 5 339 751
US-A- 5 888 256          US-B1- 6 395 237

• KRINGS L ET AL: "LINKMAN IN CEMENT PRODUCTION: OPTIMIZATION BEYOND TRADITIONAL CONTROL" ABB REVIEW, ABB ASEA BROWN BOVERI, ZURICH, CH, no. 6/7, 1995, pages 32-38, XP000529665 ISSN: 1013-3119
• BEITZ W, KÜTNNER K H: "Dubbel, Taschenbuch für den Maschinenbau" 1981 , SPRINGER VERLAG , BERLIN XP002225229 14 * page 109 - page 113 *
• "CHEMICAL ABSTRACTS + INDEXES, AMERICAN CHEMICAL SOCIETY. COLUMBUS, US" , CHEMICAL ABSTRACTS + INDEXES, AMERICAN CHEMICAL SOCIETY. COLUMBUS, US XP000661658 ISSN: 0009-2258 * the whole document *

EP 1 382 905 B1

## Description

The invention relates to the field of process control, in particular to a method, computer program product and apparatus for determining an input material mix for a kiln as described in the preamble of claim 1, 10 and 11, respectively.

## Background of the Invention

Cement producers are driven to produce different grades of cement at the lowest possible cost within continuously changing economical, environmental and technological constraints. The cement process is complex and requires high-level control to achieve long periods of stability and good performance. There are obvious benefits if the process is achieved in the most economic way.

Example of this is the overall economic optimisation of the kiln process, optimisation of the raw mix preparation process and the management of alternative fuels: Cement producers are paid for burning alternative fuels or wastes, and there is a strong interest in extending this practice as much as possible. On the other hand, traditional fuels (coal, oil and natural gas) cannot be eliminated. There are several reasons for that. For instance, the ashes from the combustion go directly into the cement clinker, and since the chemical composition of the alternative fuels is variable, constraints on the final cement composition can only be satisfied if traditional fuels serve to compensate for these variations. Moreover, legislation on pollutants, prices and costs of fuels and wastes, technological constraints like high temperatures, ramp constraints, etc. make decisions regarding "raw meal to fuel to waste" ratios very difficult. Nowadays, the determination of "raw meal to fuel to waste" ratios is done mostly manually, based on operator experience and in a very conservative way. The same problems occur in other kilns, e.g. for lime or alumina production, in which the product comprises ashes from burning the fuel and waste

US 5,888,256 describes a method for producing a fuel that is to be burned in a cement kiln: a chemical composition of different waste materials is determined, and said waste materials are blended in order to obtain a fuel that satisfies certain requirements specified by a fuel consumer. Requirements include e.g. a specified energy value and an ash residue with a specified chemical composition. However, it is not specified how the requirements are determined and how they relate to an overall economic performance of the process that involves burning the fuel in the kiln.

"Linkman in cement production: optimization beyond traditional control", Krings et al. in ABB Review Nr. 6/7 1995, pages 32 to 38, ABB Asea Brown Boveri, CH-Zurich, discloses a system for automating the core process in cement production - the burning of clinker in a rotary kiln. The system mimics the control actions of an experienced, expert kiln operator, but goes further by ensuring consistent performance and high availability.

WO-A-02/22246 discloses a system and method for optimizing mixture of raw materials from different sources with different known or unknown elemental compositions.

## Description of the Invention

It is therefore an object of the invention to create a method, computer program and apparatus for determining an input material mix for a kiln of the type mentioned initially, which accounts for economic aspects of kiln operation.

These objects are achieved by a method, computer program product and apparatus for determining an input material mix for a kiln according to the claims 1, 10 and 11.

The inventive method, for determining an input material mix for a kiln, where the kiln is fed with input materials, and said input materials are classifiable as raw material, fuel and waste, and where a product produced by operating the kiln comprises ashes from burning the fuel and waste, comprises the steps of

- determining constraints on the operation of the kiln and expressing said constraints as functions of feed rates for the raw material, fuels and wastes;
- determining a cost functional that represents total operating costs of the kiln over a given period of time and as a function of the feed rates for the raw material, fuel and waste, said cost functional including costs of raw material, costs of fuels, costs (often negative!) of wastes and revenues from the product; and
- determining time trajectories of the feed rates for the raw material, fuel and waste that minimize the cost functional and satisfy said constraints.

The invention therefore allows determining a mix of input materials that minimizes a total cost of kiln operation, i.e. maximizes a profit, over a given period of time.

In a preferred variant of the invention, said cost functional further includes costs of emissions. This allows accounting for taxes or penalties incurred by the production of unwanted gases or dust.

In a preferred embodiment of the invention, a computer program product comprises a computer readable medium, having computer program code means recorded thereon to make, when said computer program code means is loaded into an internal memory of a digital computer, the computer execute the method according to the invention.

The apparatus for determining an input material mix for a kiln according to the invention comprises a data processor, a memory coupled to the processor and computer program code means stored in said memory, where said computer program code means, when executed by the processor, causes the method according to the invention to be executed.

The inventive method, computer program product and apparatus are preferably applied to a cement kiln, the raw material being raw meal, which is a mixture of limestone and other components, and the product being clinker. In another embodiment, the invention is applied to a lime kiln, the raw material being limestone and the product being lime, or to an alumina kiln, the raw material comprising bauxite and the product being alumina.

Further preferred embodiments are evident from the dependent patent claims.

**Brief Description of the Drawings**

The subject matter of the invention will be explained in more detail in the following text with reference to preferred exemplary embodiments, which are illustrated in the attached drawings, in which

Figure 1     schematically shows input and output variables of a cement kiln process; and
Figure 2     shows a flow diagram of a computer program according to the invention

The reference symbols used in the drawings, and their meanings, are listed in summary form in the list of reference symbols.

Detailed Description of Preferred Embodiments

The inventive method is explained in terms of a cement kiln, it is however obvious to one versed in the art to apply the invention to any kiln process in which a product produced by operating the kiln comprises ashes from burning fuel and waste.

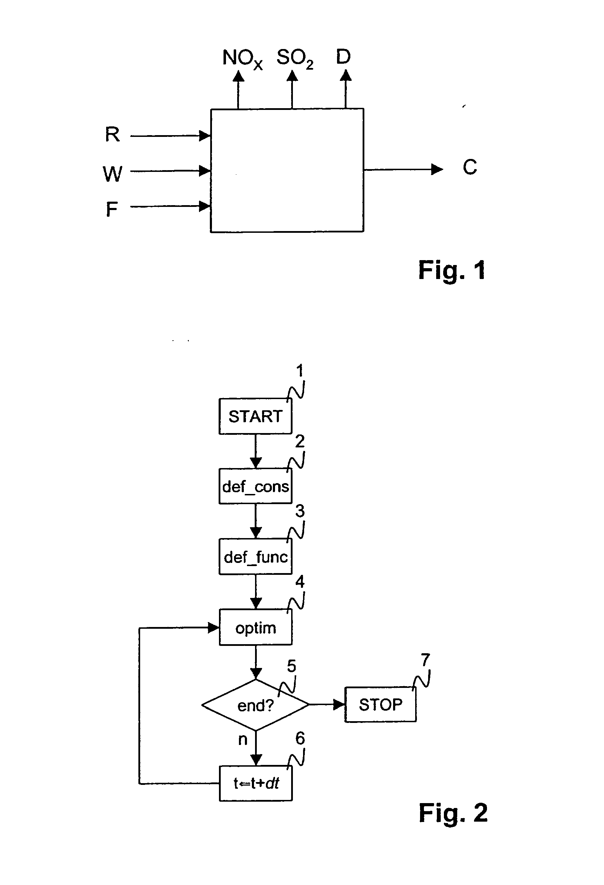

Figure 1 schematically shows input and output variables of a cement kiln process. R denotes an inflow of raw material, which for a cement kiln is called raw meal, W an inflow of waste material, and F an inflow of conventional fuel such as gas or oil. C is an outflow of a product, which for cement kiln is clinker. $NO_x$, $SO_2$ and D (dust) denote outflows of undesired materials.

In order to optimise cement kiln operation according to the invention, a number of parameters characterising the process and its context are required:

The kiln is fed from a silo filled with raw meal, i.e. essentially ground or powdered limestone. The raw meal is characterised by a function

$$hc_{raw\_meal} = hc_{raw\_meal}(l,t)$$

which gives the thermal energy needed to convert one kilogram of a layer of raw meal located at height $l$ in the silo at time t, into clinker of a desired quality. As a rule, the forecasted $hc_{raw\_meal}$ is constant, but under some circumstances can vary, for instance, when a new clinker type should be produced.

Due to environmental considerations and regulations, a number of emission types are considered. In a preferred embodiment of the invention, these are "NOx", "S02", and "Dust", and legislation regarding these emissions are represented by:

1. daily emission limit $dr_{NOx}$,$dr_{SO2}$,$dr_{Dust}$
2. instant emission limit $hr_{NOx}$,$hr_{SO2}$,$hr_{Dust}$
3. taxes or penalties to be paid per unit of emission $p_{NOx}$,$p_{SO2}$,$p_{Dust}$.

In the kiln, traditional fuel is burned, typically coal or oil. For the purpose of this explanation, parameters related to the traditional fuel are labelled as "fuel" or "coal". In addition, an alternative type of fuel is burned, which shall be called "waste". Fuel and waste are characterized by the following magnitudes.

1. $p_{coal}$,$p_{waste}$ :fuel cost ($/ton). In case of "waste", the cost is negative, i.e. the plant operator is paid for burning the waste.

2. $hc_{coal},hc_{waste}$: heat calorific value, i.e. useful thermal energy per unit of mass (MJ/ton). It is either estimated from history data or kiln operation data, or measured continuously or batch-wise, depending on the type of fuel and waste.

3. $e_{NOx\_coal}, e_{SO2\_coal}, e_{NOx\_waste}, e_{SO2\_waste}$, emission rates (in appropriate units) per ton of fuel burnt.

Finally there are also parameters related to the kiln, the plant and the product

1. $R_{coal}, R_{waste}$ : maximal rate at which a given fuel can be burnt (ton/hr).
2. *MaxFeedRate:* maximal kiln throughput at stable conditions (ton/hr).
3. *MinFeedRate*: minimal kiln throughput at stable conditions (ton/hr).
4. *MaxFeedRateChange*: maximal change of throughput per sampling time (ton/hr). Important for stability.
5. $e_{dust}$: dust emission rate per ton of raw meal.

Let $M_{coal}(t), M_{waste}(t), M_{raw\_meal}(t)$ denote amounts of "coal", "waste" and "raw meal", respectively, which are fed into the kiln at times $t = 0, dt, 2dt, .., tf$ . This is a simplification made by modelling kiln operation as a discrete-time process. In reality, said amounts are of course continuously fed into the kiln over a sampling interval or discretisation interval $dt$. Each of the amounts, e.g. $M_{coal}$, is proportional to a corresponding feed rate, e.g. $M_{coal}/dt$. The sampling interval $dt$ may have a value between e.g. 5 minutes and one hour. In a preferred embodiment of the invention, the sampling interval $dt$ remains constant. In another embodiment of the invention, the sampling interval $dt$ is changed during operation of the kiln.

According to the invention, for each sampling time $t=0, dt, 2dt, .., tf$, the magnitudes $M_{coal}(\tau) M_{waste}(\tau), M_{raw\_meal}(\tau)$, $\tau = t:t + dt, ..., tf$, which minimize a cost minus revenue functional, while meeting problem constraints, are computed. In a preferred embodiment of the invention, the cost functional is:

$$J[M_{coal}, M_{waste}, M_{raw\_meal}] = \sum_{\tau=0}^{t_f} (\cos t_{NOx}(\tau) + \cos t_{SO2}(\tau) + \cos t_{Dust}(\tau) + \cos t_{coal}(\tau) + \cos t_{waste}(\tau) + \cos t_{raw\,meal}(\tau) - rev(\tau))dt$$

where

$$\cos t_{NOx}(\tau) = p_{NOx}(e_{NOx\_raw\_meal}M_{raw\_meal}(\tau) + e_{NOx\_coal}M_{coal}(\tau) + e_{NOx\_waste}M_{waste}(\tau))$$

$$\cos t_{SO2}(\tau) = p_{SO2}(e_{SO2\_raw\_meal}M_{raw\_meal}(\tau) + e_{SO2\_coal}M_{coal}(\tau) + e_{SO2\_waste}M_{waste}(\tau))$$

$$\cos t_{NOx}(\tau) = p_{Dust}(e_{dust}M_{raw\_meal}(\tau) + e_{Dust\_coal}M_{coal}(\tau) + e_{Dust\_waste}M_{waste}(\tau))$$

$$\cos t_{coal}(\tau) = p_{coal}M_{coal}(\tau)$$

$$\cos t_{waste}(\tau) = p_{waste}M_{waste}(\tau)$$

$$\cos t_{raw\_meal}(\tau) = p_{raw\_meal}M_{raw\_meal}(\tau)$$

$$rev(\tau) = \alpha \; p_{clin\,ker}M_{raw\_meal}(\tau) \, ,$$

where $0<\alpha<1$ is an a priori known or a measured coefficient describing a conversion rate of raw meal into clinker. Typically, the "waste cost" $p_{waste}$ is a negative number. Note also that, in a preferred embodiment of the invention, the cost functional is not an affine function of $M_{coal}(.), M_{waste}(.), M_{raw\_meal}(.)$, but a general non-linear function. The cost functional can and must be adapted to each situation, e.g. when costs change in a non-linear manner according contracts related to prices of energy, waste material, clinker etc.

The constraints to be satisfied are of a variety of kinds. The most important ones are heat balance, emission limits, output limits and input limits:

Heat balance: At each moment of time $\tau = t, t + dt,..., tf$ the amount of heat produced must be at least the heat needed for converting the raw meal into clinker.

$$hc_{raw\_meal}(current\_silo\_level, \tau) M_{raw\_meal}(\tau) \leq hc_{coal} M_{coal}(\tau) + hc_{waste} M_{waste}(\tau)$$

$$current\_silo\_level = const \sum_{\tau=t}^{tf} M_{raw\_meal}(\tau) dt$$

Instant emission limit: At each moment of time $\tau = t, t + dt,..., tf$ the emission per time unit, or the emission rate, should not exceed given thresholds.

$$e_{NOx\_raw\_meal} M_{raw\_meal}(\tau) + e_{NOx\_coal} M_{coal}(\tau) + e_{NOx\_waste} M_{waste}(\tau) \leq dr_{NOx}$$

$$e_{SO2\_raw\_meal} M_{raw\_meal}(\tau) + e_{SO2\_coal} M_{coal}(\tau) + e_{SO2\_waste} M_{waste}(\tau) \leq dr_{SO2}$$

$$e_{Dust} M_{raw\_meal}(\tau) + e_{Dust\_coal} M_{coal}(\tau) + e_{Dust\_waste} M_{waste}(\tau) \leq dr_{Dust}$$

Cumulative emission limit: For each relevant pollutant, the emission over a given period of time, e.g. over one day should not exceed a given threshold.

$$\sum_{\tau=t}^{24} e_{NOx\_raw\_meal} M_{raw\_meal}(\tau) + e_{NOx\_coal} M_{coal}(\tau) + e_{NOx\_waste} M_{waste}(\tau) + NOx_{AlreadyEmitted}(t) \leq dr_{NOx}$$

$$\sum_{\tau=t}^{24} e_{SO2\_raw\_meal} M_{raw\_meal}(\tau) + e_{SO2\_coal} M_{coal}(\tau) + e_{SO2\_waste} M_{waste}(\tau) + SO2_{AlreadyEmitted}(t) \leq hr_{SO2}$$

$$\sum_{\tau=t}^{24} e_{Dust} M_{raw\_meal}(\tau) + e_{Dust\_coal} M_{coal}(\tau) + e_{Dust\_waste} M_{waste}(\tau) + Dust_{AlreadyEmitted}(t) \leq hr_{Dust}$$

where, when the inventive method is applied on-line during kiln operation, current values of the magnitudes $NOx_{AlreadyEmitted}$, $SO2_{AlreadyEmitted}$, and $Dust_{AlreadyEmitted}$, introduced above are taken from real measurements or model based sensors. If the inventive method is applied off-line, then the "already emitted" magnitudes are computed via mathematical models, using previous values of the kiln parameters, ambient conditions, etc

Maximum and minimum constraints: For technical reasons $M_{coal}(\tau), M_{waste}(\tau), M_{raw\_meal}(\tau)$ must always be between some limits.

Ramp constraints: Over a given time, the feed rate $M_{coal}(\tau), M_{waste}(\tau\tau), M_{raw\_meal}(\tau)$ cannot change by more than a given amount.

Chemical composition constraints: The product "clinker" is defined by law in terms of several relationships that the concentrations of its chemical components must satisfy. For instance,

$$92 \leq \frac{SiO2}{Al2O3 + Fe2O3} \leq 97$$

must hold. When the chemical composition of the fuels and of their ashes are known, it is easy to express the relationship above as a function of $M_{coal}(\tau), M_{waste}(\tau), M_{raw\_meal}(\tau)$.

In other preferred embodiments of the invention, one or more of the following further constraints are also considered:

1. Minimal values of ash concentration, important for cement quality.
2. Other pollutants like heavy metals, hydrocarbons, etc...
3. Requirements on the chemical composition of the final product: All the ashes also go into the cement clinker while the chemical composition of the waste i.e. alternative fuel varies with time.
4. Operative constraints on fuel and waste consumption.
5. Separate consideration of combustion process in the precalciner and the kiln.
6. Contracts to be satisfied at any cost or with given penalties.
7. Cost of electricity consumption.

According to the invention, the cost functional is minimised, subject to one or more constraints, including but not limited to the ones depicted above. If the cost functional and constraints are linear, then well-known linear programming methods may be applied.

The result of these computations is a trajectory over time of the three feed rates, i.e. of the magnitudes $M_{coal}(\tau), M_{waste}(\tau), M_{raw\_meal}(\tau\tau)$, $\tau\tau = t, t + dt, ..., tf$ of fuel, waste and raw meal, respectively. Of these values, only the one corresponding to $\tau\tau = t$ is to be input to the kiln during the interval from $t$ to $t+dt$. At time $t+dt$ new values are measured or generated for the magnitudes $NOx_{AlreadyEmitted}$, $SO2_{AlreadyEmitted}$, and $Dust_{AlreadyEmitted}$, as well as for the forecast on raw meal heat capacity, and preferably also for the coefficients and constants entering the equations above. The optimisation procedure is then repeated for the next time step. In a preferred embodiment of the invention, the coefficients used in the constraints and the optimisation functional are estimated and adjusted using Extended Kalman Filters, Neural Networks, System Identification Procedures or the like. For example, heat capacity of the waste and raw meal properties may change, rain may make it more difficult to burn, actual emissions as measured may differ from expected ones. In particular changes in ambient conditions can make retuning of the coefficients necessary.

The validity of the method has been demonstrated by a Matlab™ implementation of this problem, using a standard linear programming algorithm.

In a further preferred embodiment of the invention, the linear relationships in the cost functional and/or one or more constraint equations are replaced by general non-linear relationships defined via mathematical models based on physical first principles, or identified "black box" models like neural networks, etc. Accordingly, corresponding algorithms for non-linear optimisation are used. Such algorithms are well known from e.g. non-linear model predictive control theory.

A computer program product according to the invention implements the steps of the inventive method according to the flow diagram of Figure 2: In step 1, the program execution is started. In step 2, constraints are defined, e.g. from user input or by loading stored data or program code that specifies one or more constraint equations and/or parameters related to the actual plant that is to be controlled. In step 3, the cost functional is defined, e.g. from user input or by loading data or program code that specifies the cost functional and/or its parameters. In step 4, the optimal feed rates or amounts of input materials are determined. In a first variant of the inventive method, the optimal feed rate or amount trajectories are either stored for later use in controlling the kiln, and program execution branches 5 to the end of the program execution 7. In a second preferred variant, program execution branches 5 to step 6 where the kiln is controlled on-line according to the inventive method: A first set of values $M_{coal}(t), M_{waste}(t), M_{raw\_meal}(t)$ of the optimal trajectories is used to control the flow of fuel, waste and raw meal to the kiln, e.g. by modifying corresponding set points of low level controllers. If necessary, parameters used in the functional and/or constraints that are related to kiln operation and fuel or waste properties are updated from measurements and/or estimation results. Program execution continues with the optimisation step 4 based on the updated parameters. The loop consisting of steps 4 and 6 is repeated until the kiln is shut down or until the program is terminated through branch 5 for other reasons.

This strategy enforces optimal reactions to changing conditions in fuel, waste, raw meal quality, and not less importantly, satisfaction of both environmental and technical constraints. The strategy can also be used to prepare optimal raw meal materials in the silos, in order to make easier the extended use of alternative fuels.

The invention has been explained with reference to specific fuel and emission types as well as optimisation algorithms. However, it is obvious for those versed in the art to generalise the invention to apply to other materials and optimisation procedures. For example, other emission substances and respective penalties and/or related boundary conditions may be incorporated. Emission limits may vary over time on a daily or yearly basis in order to account for different climatic conditions. Methods from model predictive control and optimisation may be used to determine input material trajectories and for controlling the kiln based on the functional according to the invention.

List of designations

| | |
|---|---|
| R | raw meal |
| W | waste |
| F | fuel |
| C | clinker |
| $SO_2$ | $SO_2$ |
| $NO_x$ | $NO_x$ |
| D | dust |
| 1 | START, start of program |
| 2 | def_cons, define constraints |
| 3 | def_func, define functional |
| 4 | optim, optimisation |
| 5 | end?, check for termination of program |
| 6 | advance to next step in time |
| 7 | STOP, end of program |

**Claims**

1. A method for determining an input material mix for a kiln, where the kiln is fed with input materials $(R, W, F)$, said input materials being classifiable as raw material $(R)$, fuel $(F)$ and waste $(W)$, and where a product $(C)$ produced by operating the kiln comprises ashes from burning the fuel and waste, **characterized in that** the method comprises the steps of

   • determining constraints on the operation of the kiln and expressing said constraints as functions of respective feed rates for the raw material $(R)$, fuel $(F)$ and waste $(W)$;
   • determining a cost functional that represents total operating costs of the kiln over a given period of time and as a function of the feed rates for the raw material $(R)$, fuel $(F)$ and waste $(W)$, said cost functional including costs of raw material, costs of fuel, costs of waste and revenues from the product; and
   • determining trajectories of the feed rates for the raw material $(R)$, fuel $(F)$ and waste $(W)$ that minimize the cost functional and satisfy said constraints.

2. Method according to claim 1, where said cost functional further includes costs of emissions.

3. Method according to one of the preceding claims, where said constraints include a requirement that an amount of heat produced by combustion must exceed or be equal to the amount of heat absorbed by converting the raw material into the product.

4. Method according to one of the preceding claims, where said constraints include instantaneous emission rate limits that may not be exceeded.

5. Method according to one of the preceding claims, where said constraints include cumulative emission limits that may not be exceeded over a given period of time.

6. Method according to one of the preceding claims, where said constraints include upper and lower bounds on at least one of the feed rates for the raw material $(R)$, fuel $(F)$ and waste $(W)$.

7. Method according to one of the preceding claims, where said constraints include upper and lower bounds on changes of at least one of the feed rates for the raw material $(R)$, fuel $(F)$ and waste $(W)$.

8. Method according to one of the preceding claims, where the constraints on the operation and the cost functional are linear expressions of the feed rates for the raw material (R), fuel (F) and waste (W) and where the trajectories of feed rates are determined by linear programming.

9. Method according to one of the preceding claims, comprising the step of controlling operation of the kiln in accordance with at least part of the determined trajectories of feed rates for the raw material (R), fuel (F) and waste (W).

10. Computer program product for determining an input material mix for a kiln, comprising a computer readable medium, having computer program code means recorded thereon, where said computer program code means is loadable and executable on a data processing unit and when being executed, performs the steps according to one of claims 1 to 8.

11. Apparatus for determining an input material mix for a kiln, comprising a data processor, a memory coupled to the processor and computer program code means stored in said memory, where said computer program code means, when executed by the processor, performs the steps according to one of claims 1 to 8.

**Patentansprüche**

1. Verfahren zum Bestimmen eines Stoffgemisches zur Zufuhr in einen Ofen, wobei dem Ofen Zuführstoffe (R, W, F) zugeführt werden, wobei die Zuführstoffe als Rohstoff (R), Kraftstoff (F) und Müll (W) klassifiziert sind, und wobei ein Produkt (C), das durch das Betreiben des Ofens erzeugt wird, Asche vom Verbrennen des Kraftstoffs und des Mülls umfasst, **dadurch gekennzeichnet, dass** das Verfahren die folgenden Schritte umfasst:

- Bestimmen der Randbedingungen des Betriebs des Ofens und Ausdrücken der Randbedingungen als Funktionen der jeweiligen Zuführrate für den Rohstoff (R), Kraftstoff (F) und Müll (W);
- Bestimmen einer Kostenfunktion, die die Gesamtbetriebskosten des Ofens über eine bestimmte Zeitdauer und als Funktion der Zuführraten von Rohstoff (R), Kraftstoff (F) und Müll (W) darstellt, wobei die Kostenfunktion die Rohstoffkosten, Kraftstoffkosten, Müllkosten und die Einkünfte durch das Produkt umfasst; und
- Bestimmen von Kurven der Zuführraten für Rohstoff (R), Kraftstoff (F) und Müll (W), die die Kostenfunktion minimiert und die Randbedingungen erfüllt.

2. Verfahren nach Anspruch 1, wobei die Kostenfunktion ferner die Emissionskosten umfasst.

3. Verfahren nach einem der vorhergehenden Ansprüche, wobei die Randbedingungen eine Anforderung umfasst, dass eine Wärmemenge, die durch Verbrennung erzeugt wird, die Wärmemenge übertrifft oder gleich der Wärmemenge ist, die beim Umwandeln des Rohstoffs in das Produkt aufgenommen wird.

4. Verfahren nach einem der vorangehenden Ansprüche, wobei die Randbedingungen wahre Emissionsgrenzwerte umfassen, die nicht überschritten werden dürfen.

5. Verfahren nach einem der vorangehenden Ansprüche, wobei die Randbedingungen kumulative Emissionsgrenzwerte umfassen, die nicht überschritten werden dürfen über eine bestimmte Zeitdauer.

6. Verfahren nach einem der vorangehenden Ansprüche, wobei die Randbedingungen obere und untere Grenzen von mindestens einer der Zuführraten von Rohstoff (R), Kraftstoff (F) und Müll (W) umfassen.

7. Verfahren nach einem der vorangehenden Ansprüche, wobei die Randbedingungen obere und untere Grenzen für Änderungen von mindestens einer der Zuführraten von Rohstoff (R), Kraftstoff (F) und Müll (W) umfassen.

8. Verfahren nach einem der vorangehenden Ansprüche, wobei die Randbedingungen für den Betrieb und die Kostenfunktion lineare Ausdrücke der Zuführraten von Rohstoff (R), Kraftstoff (F) und Müll (W) sind und wobei die Kurven der Zuführraten durch lineares Programmieren bestimmt werden.

9. Verfahren nach einem der vorangehenden Ansprüche, den Schritt des Steuerns umfassend für den Betrieb des Ofens gemäß mindestens eines Teils der bestimmten Kurven von Zuführraten für Rohstoff (R), Kraftstoff (F) und Müll (W).

10. Computerprogrammprodukt zum Bestimmen eines Stoffgemisches zur Zufuhr in einen Ofen, ein computerlesbares Medium umfassend, das Mittel der Computerprogrammkodierung auf sich aufgezeichnet hat, wobei die Mittel der Computerprogrammkodierung ladbar und ausführbar auf einer Datenverarbeitungseinheit sind und wenn sie durchgeführt werden, die Schritte gemäß einem der Ansprüche 1 bis 8 ausführen.

**11.** Vorrichtung zum Bestimmen eines Stoffgemisches zur Zufuhr in einen Ofen, umfassend einen Datenprozessor, einen Speicher, der an den Prozessor gekoppelt ist und Mittel der Computerprogrammkodierung, die in dem Speicher gespeichert sind, wobei die Mittel der Computerprogrammkodierung, wenn sie durch den Prozessor durchgeführt werden, die Schritte gemäß einem der Ansprüche 1 bis 8 ausführen.

**Revendications**

**1.** Procédé pour déterminer un mélange de matériaux d'entrée destiné à un four à calcination, dans lequel le four à calcination est alimenté avec des matériaux d'entrée (R,W,F), lesdits matériaux d'entrée pouvant être classifiés en matériau brut (R), combustible (F) et déchets (W) et dans lequel un produit (C) produit par le fonctionnement du four à calcination comprend des cendres résultant de la combustion du combustible et des déchets, **caractérisé en ce que** le procédé comprend les étapes consistant à

- Déterminer des contraintes s'appliquant au fonctionnement du four à calcination et exprimer lesdites contraintes comme des fonctions des taux d'alimentation respectifs du matériau brut (R), du combustible (F) et des déchets (W) ;
- Déterminer une fonction de coût qui représente les coûts d'exploitation totaux du four à calcination sur une période de temps donnée et comme une fonction des taux d'alimentation du matériau brut (R), du combustible (F) et des déchets (W), ladite fonction de coût incluant les coûts du matériau brut, les coûts du combustible, les coûts des déchets et les recettes du produit ; et
- Déterminer les trajectoires des taux d'alimentation du matériau brut (R), du combustible (F) et des déchets (W) qui minimisent la fonction de coût et satisfont auxdites contraintes.

**2.** Procédé selon la revendication 1, dans lequel ladite fonction de coût inclut en outre les coûts des émissions.

**3.** Procédé selon l'une quelconque des revendications précédentes, dans lequel lesdites contraintes incluent une exigence qu'une quantité de chaleur produite par la combustion doit excéder ou être égale à la quantité de chaleur absorbée par la conversion du matériau brut en produit.

**4.** Procédé selon l'une quelconque des revendications précédentes, dans lequel lesdites contraintes incluent des limites des taux d'émissions instantanées qui ne doivent pas être dépassées.

**5.** Procédé selon l'une quelconque des revendications précédentes, dans lequel lesdites contraintes incluent des limites d'émissions cumulatives qui ne doivent pas être dépassées sur une période de temps donnée.

**6.** Procédé selon l'une quelconque des revendications précédentes, dans lequel lesdites contraintes incluent des limites supérieures et inférieures sur au moins un des taux d'alimentation du matériau brut (R), du combustible (F) et des déchets (W).

**7.** Procédé selon l'une quelconque des revendications précédentes, dans lequel lesdites contraintes incluent des limites supérieures et inférieures aux changements d'au moins un des taux d'alimentation du matériau brut (R), du combustible (F) et des déchets (W) .

**8.** Procédé selon l'une quelconque des revendications précédentes, dans lequel les contraintes s'appliquant au fonctionnement et la fonction de coût sont des expressions linéaires des taux d'alimentation du matériau brut (R), du combustible (F) et des déchets (W) et dans lequel les trajectoires des taux d'alimentation sont déterminées par une programmation linéaire.

**9.** Procédé selon l'une quelconque des revendications précédentes, comprenant l'étape consistant à commander le fonctionnement du four à calcination en conformité avec au moins une partie des trajectoires déterminées des taux d'alimentation du matériau brut (R), du combustible (F) et des déchets (W).

**10.** Produit de programme informatique pour déterminer un mélange de matériaux d'entrée destiné à un four à calcination, comprenant un medium pouvant être lu par un ordinateur, comportant un moyen de code de programme informatique enregistré sur celui-ci, dans lequel ledit moyen de code de programme informatique peut être chargé et exécuté sur une unité de traitement de données et, lorsqu'il est exécuté, effectue les étapes selon l'une des revendications 1 à 8.

11. Appareil pour déterminer un mélange de matériaux d'entrée destiné à un four à calcination, comprenant un processeur de données, une mémoire couplée au processeur et un moyen de code de programme informatique mémorisé dans ladite mémoire, dans lequel ledit moyen de code de programme informatique, lorsqu'il est exécuté par le processeur, effectue les étapes selon l'une des revendications 1 à 8.

NO$_x$  SO$_2$  D

R

W

F

C

**Fig. 1**

START  1

def_cons  2

def_func  3

optim  4

end?  5

STOP  7

n

t⇐t+*dt*  6

**Fig. 2**